# EUROPÄISCHE PATENTSCHRIFT

(11) **EP 0 960 838 B1**
(45) Veröffentlichungstag und Bekanntmachung des Hinweises auf die Patenterteilung: **25.10.2000**
(21) Anmeldenummer: 98108672.1
(22) Anmeldetag: 13.05.1998
(51) Int. Cl.: B65G 17/06, B65G 17/38, B65G 47/96, B07C 3/08

(54) **Stückgutförderer (Sorter) mit Kipp-Förderelementen**
Article conveyor (sorter) having tiltable conveyor parts
Transporteur d'article (trieuse) avec des éléments de transport basculants

(43) Veröffentlichungstag der Anmeldung: 01.12.1999
(60) Teilanmeldung: 99115749.6
(73) Patentinhaber: Bernhard Beumer Maschinenfabrik KG, D-59269 Beckum (DE)
(72) Erfinder: Pölling, Ludwig, 59239 Wadersloh (DE)
(74) Vertreter: Hoormann, Walter, Dr.-Ing.

(56) Entgegenhaltungen:
- EP-A- 0 664 262
- EP-A- 0 753 474
- DE-A- 19 721 850
- FR-A- 2 304 413
- US-A- 3 231 066
- US-A- 4 586 613

## Beschreibung

Die Erfindung betrifft einen Stückgut-Gliederförderer nach dem Oberbegriff des Anspruches 1, der insbesondere zum Sortieren von Stückgutteilen bestimmt und geeignet ist, die an einer Aufgabestelle jeweils einzeln auf eine Tragplatte aufgegeben werden, und an einer vorgegebenen Abgabestelle von mehreren zur Verfügung stehenden Abgabestellen durch seitliches Kippen der Tragplatte wieder abgegeben werden.

Derartige auch als Sorter bezeichnete Förderer sind in unterschiedlichster Ausgestaltung bekannt, wobei i.a. zwischen einander benachbarten Tragplatten ein erheblicher Abstand (nachstehend auch als Trennfuge bezeichnet) vorhanden ist, damit sie beim Durchfahren von horizontal gekrümmten Abschnitten der Förderbahn (nachstehend auch Horizontalkurven genannt) nicht miteinander kollidieren. Unabhängig von ihrer Breite verengen sich die Trennfugen beim Durchfahren von Horizontalkurven an der Innenseite des von den Tragplatten gebildeten Fördertrums und erweitern sich an dessen Außenseite, so daß Stückgutteile, die über den vorderen oder hinteren Rand einer Tragplatte vorstehen und mit einem Abschnitt in eine Trennfuge ragen, ggf. dort eingeklemmt (und beschädigt) werden. Das kann z.B. bei Gepäckstücken wie Rucksäcken o.dgl. der Fall sein, deren Tragriemen in eine Tragfuge greifen, kommt aber auch in diversen anderen Einsatzfällen nicht selten vor, insbesondere wenn sich ein Stückgutteil beim Transport relativ zur Tragplatte verschiebt und es sich um nicht in sich starre, formstabile Stückgüter handelt.

Es ist daher wünschenswert, eine im wesentlichen geschlossene Tragfläche zur Verfügung zu haben, die auch beim Durchfahren von Horizontalkurven als solche erhalten bleibt, ohne daß sich dabei zwischen einander benachbarten Tragplatten Spalte bilden. Dieses wird bei bekannten gattungsähnlichen Förderern schon seit langem dadurch erreicht, daß man die Tragplatten einander so weit überlappend ausbildet, daß die Tragfläche auch in Horizontalkurven geschlossen bleibt. Diese bekannten Gliederförderer eignen sich aber nicht als sog. Kipp-Sorter, da ihre Tragplatten jeweils eine benachbarte Tragplatte überlappen und außerdem an ihrem anderen Ende von einer benachbarten Tragplatte überlappt werden, so daß sie sich weder einzeln noch auch in Gruppen seitlich kippen lassen.

Man hat dieses Überlappungsprinzip zwar auch bereits bei einem Kipp-Sorter angewendet und dessen Tragplatten aus vier einander jeweils überlappenden Tragplattenabschnitten gebildet, die jeweils mittels einer gesonderten Stützeinrichtung an einer Stützkette abgestützt sind (s. FR-OS 2 304 413). Dabei ist aber zwischen einander benachbarten Tragplatten dennoch eine Trennfuge vorhanden, deren Breite sich beim Durchfahren von Horizontalkurven verändert, so daß es ebenfalls zu einem Einklemmen von Stückgut kommen kann.

Ein weiterer Nachteil bekannter Sorter besteht darin, daß ein auf einer Tragplatte angeordnetes Stückgutteil unter eine benachbarte Tragplatte gelangen kann, wenn diese in ihre schräge Abgabestellung gekippt ist, so daß sie danach nicht wieder in ihre Transportstellung zurückzukippen ist.

Dieses Problem wird bei dem aus der EP 0 753 474 A1 bekannten gattungsgemäßen Förderer dadurch gelöst, daß am - rechtwinklig zur Förderrichtung verlaufenden - vorderen und hinteren Rand jeder Tragplatte eine von ihrer Tragfläche senkrecht nach unten gerichtete Stirnwand angeordnet ist, die beim Kippen einer Tragplatte zur jeweils benachbarten Tragplatte eine Art Abweiser bildet, so daß von dort aus kein Stückgut unter die gekippte Tragplatte gelangen kann.

Bei diesem bekannten Förderer ist auch das zuvor behandelte Problem grundsätzlich gelöst, indem die Tragplatten jeweils aus zwei Tragplattenabschnitten gebildet sind, die einander im mittleren Bereich der Tragplatte so weit überlappen, daß die Überlappung auch beim Durchfahren von Horizontalkurven stets erhalten bleibt. Dabei erstreckt sich der eine Tragplattenabschnitt vom vorderen Rand der Tragplatte nach hinten und der andere Tragplattenabschnitt vom hinteren Rand der Tragplatte nach vorn, wobei jeder Tragplattenabschnitt an seinem dem Überlappungsbereich abgekehrten Querrand mit einer Stützeinrichtung so an der Stützkette abgestützt ist, daß einander benachbarte Tragplattenabschnitte von einander benachbarten Tragplatten beim Durchfahren von Horizontalkurven nicht relativ zueinander verschwenkt werden, indem ihre Stützeinrichtungen an einem Glied der Stützkette (und nicht an benachbarten Gliedern) abgestützt werden. Es ist dann zwar zwischen benachbarten Tragplatten eine Trennfuge vorhanden, doch kann deren Breite beliebig klein ausgeführt werden, so daß eine praktisch geschlossene Tragfläche vorhanden ist, wenn die Tragplatten jeweils - wie dort vorgesehen - eng benachbart zueinander angeordnet werden.

Da bei diesem bekannten Förderer die (oberen Stützabschnitte der) Stützeinrichtungen jeweils unmittelbar am vorderen und hinteren Rand jeder Tragplatte angeordnet sein sollen, sind auch sie beiderseits einer Trennfuge unmittelbar benachbart zueinander angeordnet, wobei jeweils die oberen Stützabschnitte von zwei Tragplattenabschnitten, die zu verschiedenen Tragplatten gehören, an eine gemeinsame Kippachse angelenkt sind, die von einem unteren Stützabschnitt gehalten ist. Die jeweils einem oberen Stützabschnitt einer Tragplatte zugeordnete Kippeinrichtung, mittels welcher die Tragplatte an einer vorgegebenen Abgabestelle seitlich zu kippen ist, kann daher aus Platzgründen nicht in die betreffende Stützeinrichtung integriert werden, sondern muß mit Versatz (in Förderrichtung) an einem oberen Stützabschnitt angeordnet werden, zumal auch die Stirnwände jeweils am vorderen und hinteren Rand jeder Tragplatte angeordnet sind, also jeweils in der vertikalen Ebene liegen, in der auch der betreffende obere Stützabschnitt angeordnet ist.

Die Ausbildung der beiden Tragplattenabschnitte jeder Tragplatte als Kragträger, die jeweils von einem oberen Stützabschnitt einer Stützeinrichtung zum Überlappungsbereich gerichtet vorstehen, führt vor allem auch dazu, daß sowohl die Tragplattenabschnitte als auch die Stützeinrichtungen erheblichen Biegemomenten unterworfen werden, wenn eine Tragplatte mit einem relativ schweren Stückgutteil beaufschlagt wird, welches i.a. mittig auf eine Tragplatte aufgegeben wird, so daß zur Erzielung der erforderlichen Festigkeit ein entsprechender Aufwand getroffen werden muß. Dieser wird noch dadurch vergrößert, daß die Tragplattenabschnitte wenigstens im Überlappungsbereich flexibel, also so elastisch ausgebildet sein sollen, so daß sie sich beim Durchfahren von vertikal gekrümmten Förderbahnabschnitten, die zwischen einem horizontalen und einem schräg zur Horizontalen verlaufenden Förderbahnabschnitt vorhanden sind, ohne Blockierung und/oder Beschädigung verformen können. Die Tragplattenabschnitte sind daher zur Erfüllung beider obiger Forderungen durchgehend flexibel ausgebildet und jeweils außerhalb des Überlappungsbereiches an ihrer Unterseite mit einem biegesteifen Kragarm verbunden, der seinerseits mit dem zugehörigen oberen Stützabschnitt verbunden ist.

Wie bereits ausgeführt worden ist, liegt der Überlappungsbereich bei dem aus der EP 0 753 474 A1 bekannten Förderer im wesentlichen mittig zwischen dem vorderen und hinteren Rand jeder Tragplatte und erstreckt sich nur über einen Bruchteil ihrer Länge, so daß ein längeres Stückgutteil von beiden Tragplattenabschnitten abgestützt wird. Da die beiden Tragplattenabschnitte beim Durchfahren einer Horizontalkurve relativ zueinander verschwenkt werden, kann es dadurch dazukommen, daß das Stückgutteil danach eine andere Relativlage zur Tragplatte hat und ggf. sogar seitlich über diese vorsteht, so daß es zu einer Kollision mit neben der Förderbahn vorhandenen festen Teilen oder Personen kommen kann. Außerdem ist eine Lageveränderung von Stückgutteilen während ihres Transportes häufig für den Abgabevorgang ungünstig.

Der vorliegenden Erfindung liegt die Aufgabe zugrunde, einen gegenüber dem Stand der Technik erheblich vereinfachten und auch i.ü. verbesserten gattungsgemäßen Förderer mit stets im wesentlichen geschlossener Tragfläche zu schaffen, der die obigen Nachteile nicht aufweist, und ggf. auch mit nahezu beliebigen bekannten Stützeinrichtungen ausgebildet sein kann, u.a. solchen, die aufgrund der Tragplattenbewegung beim Kippen (durch gleichzeitiges Absenken der Tragplatte beim Kippvorgang) eine besonders schonende Stückgutabgabe gewährleisten.

Die Lösung dieser Aufgabe erfolgt durch die Merkmale des Anspruches 1.

Aufgrund des Merkmals, daß der obere Tragplattenabschnitt jeder Tragplatte aus einer sich im wesentlichen über die gesamte Länge der Tragplatte erstreckenden, biegesteifen Platte od. dgl. besteht, wird zunächst einmal sichergestellt, daß ein auf eine Tragplatte aufgegebenes Stückgutteil - auch im Bereich von Horizontalkurven der Förderbahn - praktisch nur vom oberen Tragplattenabschnitt abgestützt wird, so daß es seine Relativlage zur Tragplatte stets beibehält. Vor allem wird dadurch aber erreicht, daß der untere Tragplattenabschnitt durch das Gewicht eines auf eine Tragplatte aufgegebenen Stückgutteils praktisch nicht belastet wird, so daß er nicht mittels einer Stützeinrichtung an der Stützkette abgestützt zu werden braucht und man daher mit nur einer Stützeinrichtung je Tragplatte auskommt. Da diese nach einem weiteren Merkmal der vorliegenden Erfindung nicht an dem freien Querrand des oberen Tragplattenabschnittes, sondern mit Abstand zum Überlappungsbereich, vorzugsweise etwa mittig zur Tragplatte, am oberen Tragplattenabschnitt angeordnet ist, können nicht nur konventionelle Stützeinrichtungen mit integrierter Kippeinrichtung (einschließlich solcher mit beim Kippen abgesenkter Tragplatte) verwendet werden, sondern es ergibt sich zugleich eine günstigere Übertragung der vom Stückgut ausgeübten Gewichtskraft auf die Stützkette, insb. wenn der obere Tragplattenabschnitt im wesentlichen mittig abgestützt wird.

Da der untere Tragplattenabschnitt einer Tragplatte von dem auf ihr ruhenden Stückgut praktisch unbelastet ist und daher nicht mit einer Stützeinrichtung an der Stützkette abgestützt zu werden braucht, andererseits aber beim Kippen der Tragplatte mitgekippt werden soll, und dabei vermieden werden muß, daß er seitlich aus der Führung des oberen Tragplattenabschnittes gleitet, ist er bei einer Ausgestaltung an einer Stirnwand mit einem zur Kippachse fluchtenden Schwenkbolzen an die ihm unmittelbar benachbarte Stirnwand des oberen Tragplattenabschnittes der benachbarten Tragplatte angelenkt. Da der Schwenkbolzen kaum belastet ist, kann er relativ klein ausgebildet sein, wobei es sich dennoch als zweckmäßig herausgestellt hat, ihn nicht nur als Durchsteckbolzen auszubilden, der durch entsprechende Bohrungen in den Stirnwänden geführt (und gegen ein axiales Herausgleiten gesichert) ist, sondern ihn jeweils in buchsenförmigen Ansätzen der Stirnwände zu lagern.

Wird der Schwenkbolzen in einer benachbarten Stirnwand in einem vertikalen Langloch geführt, so können bei einer solchen Ausführung mit Tragplatten-Stirnwänden auch aus der EP 0 664 262 bekannte Stützeinrichtungen verwendet werden, deren Tragplatte beim Kippen in zweckmäßiger Weise abgesenkt wird, so daß eine sehr schonende, gezielte Stückgutabgabe erfolgen kann.

Um ein problemloses Durchfahren von Vertikalkurven zu ermöglichen, kann der untere Tragplattenabschnitt jeweils in bekannter Weise flexibel ausgebildet sein. Da eine solche Ausbildung aber im Verlaufe der Zeit zu Ermüdungsbrüchen führen kann, ist in einer ersten Ausgestaltung für vertikalkurvengängige Förderer vorgesehen, auch den unteren Tragplattenabschnitt jeder Tragplatte jeweils als starre Platte auszubilden und an seinem dem Überlappungsabschnitt abgekehrten Querrand über ein Gelenk mit seiner Stirnwand zu verbinden, so daß er im Bereich einer Vertikalkurve relativ zu seiner Stirnwand nach oben oder unten zu verschwenken ist.

Andere Ausbildungen kurvengängiger erfindungsgemäßer Förderer weisen ein an der Stützeinrichtung angeordnetes bzw. an der Stützkette abgestütztes Gleit- und Gelenkelement je Tragplatte sowie ggf. eine als Gleitschuh od.dgl. ausgebildete Gleiteinheit auf, die über ein (Gleit-)Stützelement mit der benachbarten Stützeinrichtung verbunden sein kann.

Bevorzugte Ausgestaltungen der Erfindung sind in den Unteransprüchen beschrieben.

Die Erfindung wird nachstehend an Ausführungsbeispielen unter Bezugnahme auf eine vereinfachte Zeichnung weiter erläutert. Es zeigt:
- Fig. 1:: Eine seitliche Draufsicht auf einen Längsabschnitt eines erfindungsgemäßen Kipp-Sorters, wobei diverse Teile (z.B. die Abstützung und Führung der Stützkette) fortgelassen worden sind;
- Fig. 1a:: einen vergrößerten Ausschnitt aus Fig. 1;
- Fig. 2:: den in Fig. la mit einem strichpunktierten Kreis II umrandeten Ausschnitt in vergrößerter Darstellung;
- Fig. 3:: eine stark vereinfachte Teildraufsicht auf den Sorter gem. Fig. 1 im Bereich einer Horizontalkurve;
- Fig. 4a,b:: eine stark vergrößerte, teilweise vervollständigte Schnittansicht in Richtung der Schnittlinie IV-IV in Fig. 1a gesehen, wo bei Fig. 4a die horizontale Transportstellung und Fig. 4b die schräge Kippstellung einer Tragplatte zeigt;
- Fig. 5:: eine stark schematisierte, perspektivische Darstellung einiger Tragplatten mit ihren Stirnwänden;
- Fig. 6:: eine stark schematisierte Teildarstellung in einer Ansicht gem. Fig. 1, welche einen Abschnitt des Förderers beim Durchfahren von Vertikalkurven zeigt;
- Fig. 7:: eine vergrößerte Darstellung des in Fig. la mit einer strichpunktierten Linie VII umrandeten Bereichs, wobei der untere Tragplattenabschnitt mit einem Gelenk an seine Stirnwand angelenkt ist;
- Fig. 7a:: eine dem unteren Abschnitt von Fig. 7 entsprechende perspektivische Darstellung von zwei einander benachbarten Stirnwänden, von denen die eine mit einem fest angeordneten Schwenkbolzen versehen ist, der in einem Langloch der anderen Stirnwand geführt ist;
- Fig. 7b:: eine Fig. 7a entsprechende, etwas verkleinerte (und weitergehende) Teilansicht, bei welcher der Schwenkbolzen eine andere Relativstellung im Langloch der anderen Stirnwand einnimmt, und ein Teil der benachbarten Stützeinrichtung im nahezu gekippten Zustand zu sehen ist;
- Fig. 8:: eine Draufsicht auf eine bevorzugte andere Ausgestaltung eines erfindungsgemäßen Förderers mit horizontal gekrümmten Förderabschnitten, und zwar eine Draufsicht in Richtung des Pfeiles VIII in Fig. 9 auf eine mit ausgezogenen Linien dargestellte Tragplatte, sowie eine Teildraufsicht auf die sich hieran nach rechts anschließende Tragpltte (mit gestrichelten Linien dargestellt), die in Fig. 8 relativ zu der anderen Tragplatte in der Horizontalen verschwenkt ist;
- Fig. 9:: eine Schnittansicht durch die Tragplatten gem. Fig. 8 in Richtung der Schnittlinie IX-IX in Fig. 8 gesehen;
- Fig. 10:: einen Schnitt durch die Tragplatte gem. den Fig. 8 bzw. 9 in Richtung der Schnittlinie X-X in Fig. 8 gesehen;
- Fig. 11:: die in Fig. 10 mit einem strichpunktierten Kreis umrahmte Einzelheit XI in vergrößerter Darstellung;
- Fig. 12:: eine stark schematisierte Teildarstellung einer Variante, nämlich eine seitliche Teildraufsicht auf zwei einander benachbarte Förderelemente, die sich an einem nicht gekrümmten Abschnitt der Förderbahn befinden;
- Fig. 13:: den Förderstrangabschnitt gem. Fig. 12 im Bereich einer konvexen Vertikalkurve;
- Fig. 14:: den Förderstrangabschnitt gem. Fig. 12 im Bereich einer konkaven Vertikalkurve;
- Fig. 15:: eine Fig. 12 entsprechende Darstellung zwecks Zuordnung der nachfolgenden Fig. 16 und 17;
- Fig. 16:: einen Vertikalschnitt durch die Darstellung gem. Fig. 15 in Richtung der Schnittlinie XVI/XVII-XVI/ XVII gesehen im Bereich einer konvexen Kurve;
- Fig. 17:: eine Fig. 16 entsprechende Darstellung im Bereich einer konkaven Kurve;
- Fig. 18:: eine den Fig. 12 bzw. 15 entsprechende Darstellung zwecks Zuordnung der nachfolgenden Fig. 19 und 20;
- Fig. 19:: einen Schnitt durch die Darstellung gem. Fig. 18 in Richtung der Schnittlinie XIX/XX-XIX/XX gesehen im Bereich einer konvexen Kurve;
- Fig. 20:: eine Fig. 19 entsprechende Darstellung im Bereich einer konkaven Kurve;
- Fig. 21:: einen Schnitt durch die Darstellung gem. Fig. 18 in Richtung der Schnittlinie XVI/XVII-XVI/XVII gesehen beim Kippen (in der Zeichnung nach rechts);
- Fig. 22:: eine den Darstellungen gem. Fig. 12 bzw. Fig. 15 bzw. Fig. 18 entsprechende Darstellung zwecks Zuordnung der nachfolgenden Darstellungen gem. den Fig. 23 und 24;
- Fig. 23:: einen Schnitt durch die Darstellung gem. Fig. 22 in Richtung der Schnittlinie XXIII/XXIV-XXIII/XXIV in Fig. 22 gesehen im Bereich eines geraden Förderstreckenabschnittes;
- Fig. 24:: eine Fig. 23 entsprechende Darstellung im Bereich einer Horizontalkurve; und
- Fig. 25:: eine weitere Variante in einer Fig. 12 entsprechenden Darstellung, wobei das Stützelement für den zugeordneten Gleitschuh jeweils nicht an der Stützeinrichtung abgestützt, sondern direkt zum darunter liegenden Kettenelement heruntergeführt ist bzw. sich von dort aus nach oben erstreckt.

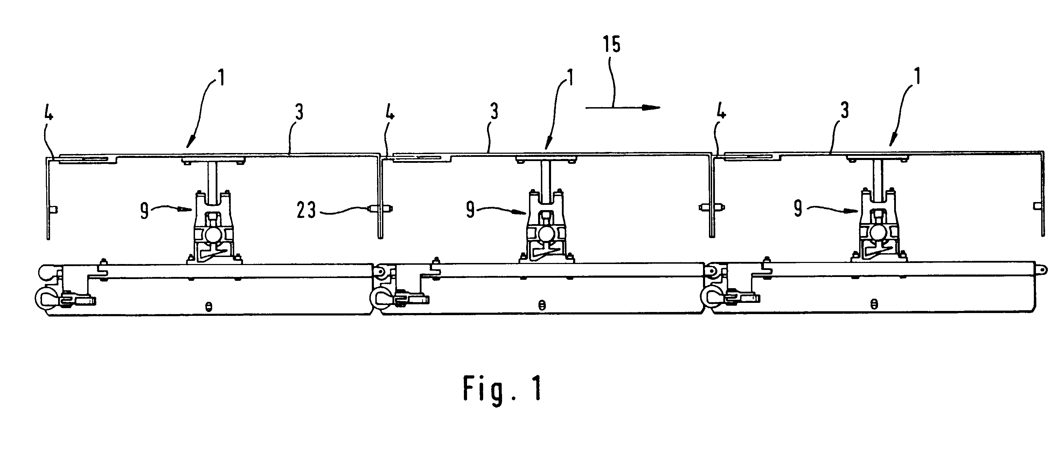

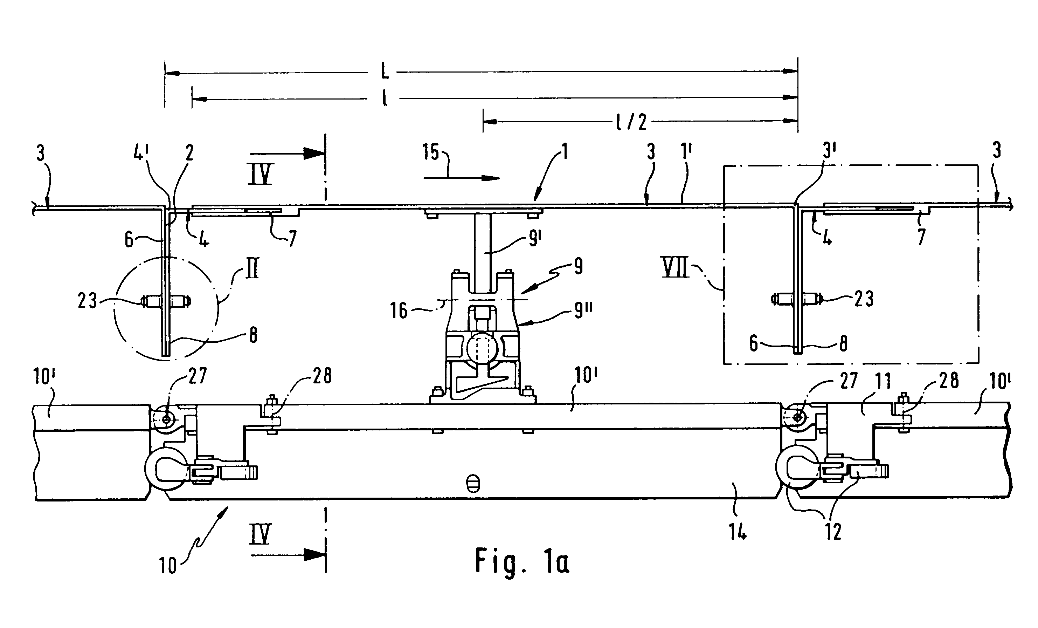

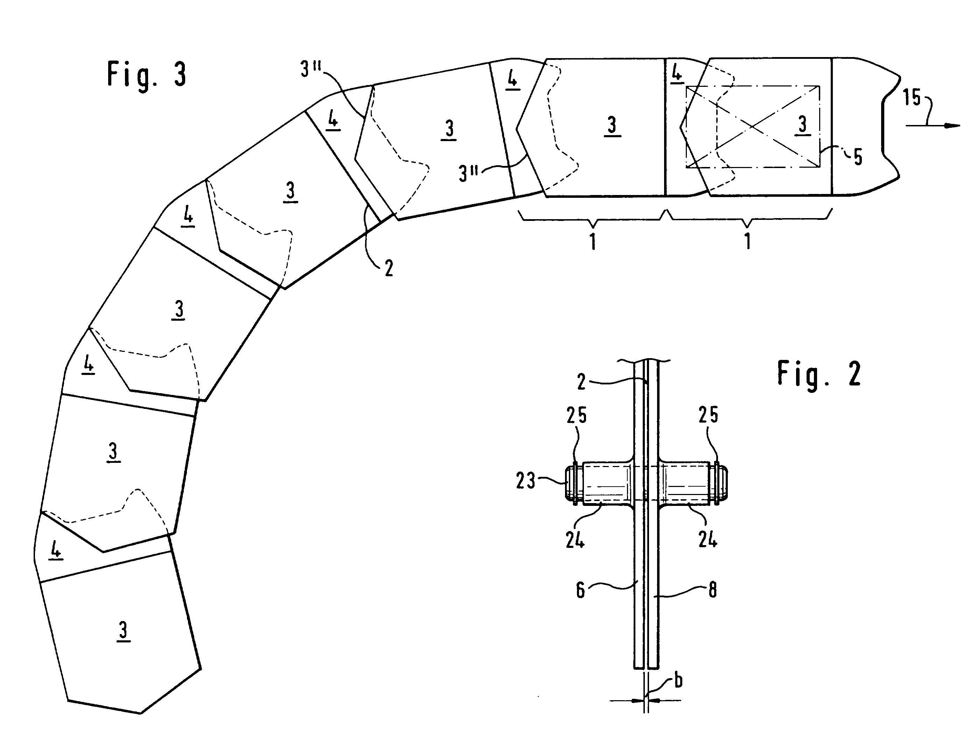

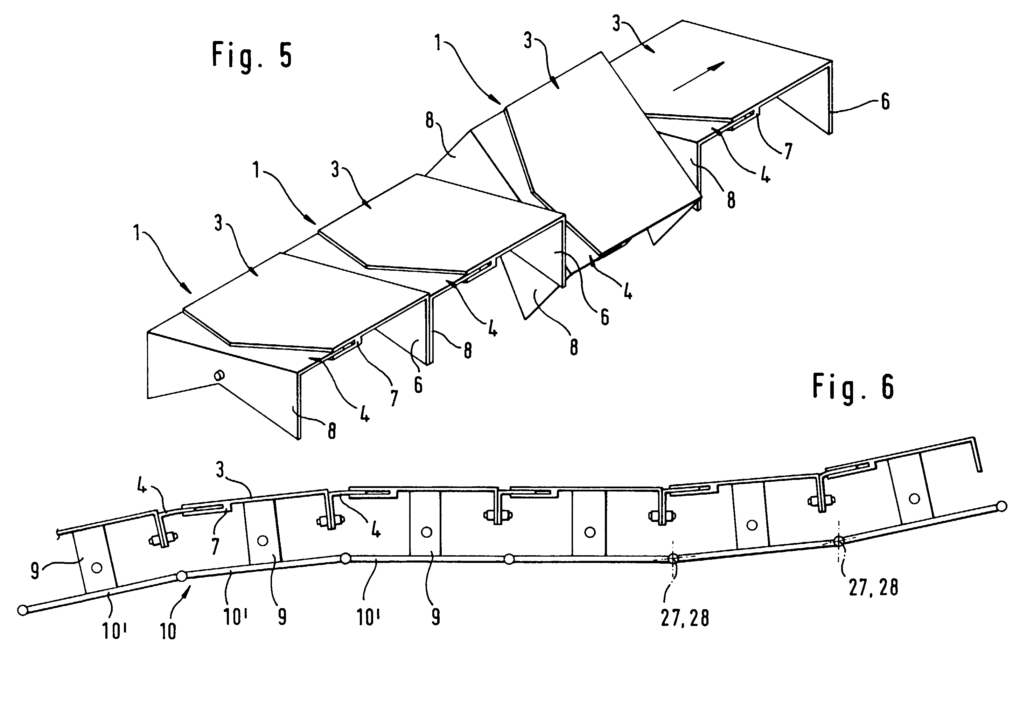

Die Fig. 1 und 1a zeigen in einer vereinfachten Seitenansicht einen Abschnitt eines Stückgut-Gliederförderers zum Sortieren von Stückgutteilen, der längs einer in sich geschlossenen Förderbahn umläuft, die horizontale Abschnitte (s. z.B. Fig. 1, 1a) und schräg zur Horizontalen verlaufende Abschnitte (siehe z.B. Fig. 6) aufweist. Da die Förderbahn endlos ist, weist der Förderer horizontal gekrümmte Abschnitte (Horizontalkurven) auf (s. z.B. Fig. 3).

Das Fördertrum besteht aus einer Vielzahl von (in der Draufsicht) rechteckigen Tragplatten 1, die jeweils unter Bildung einer sehr schmalen Trennfuge 2 einer Breite b von lediglich 2 mm eng benachbart hintereinander angeordnet sind. Um dennoch ein Durchfahren der Horizontalkurven zu ermöglichen, bestehen die Tragplatten 1 jeweils aus zwei parallelen, einander teilweise überlappenden Tragplattenabschnitten 3, 4. Der obere Tragplattenabschnitt 3 jeder Tragplatte 1 besteht aus einer biegesteifen Platte (also einem plattenförmigen Element, welches sich bei Beaufschlagung mit einem Stückgutteil senkrecht zur Tragfläche praktisch nicht verformt). Ihre Länge 1 ist nur etwas kleiner als die Gesamtlänge L einer Tragplatte 1, so daß ein Stückgutteil 5, welches an einer nicht dargestellten Aufgabestelle auf eine Tragplatte 1 aufgegeben wird, praktisch nur vom oberen Tragplattenabschnitt 3 abgestützt ist.

Der obere Tragplattenabschnitt 3 jeder Tragplatte 1 ist an seinem vorderen Rand 3' mit einer von der Tragfläche 1' senkrecht nach unten gerichteten Stirnwand 6 versehen und an seinem hinteren Endabschnitt mit einer an seiner Unterseite ausgebildeten, schlitzförmigen Führung 7, in welcher der untere Tragplattenabschnitt 4 der Tragplatte 1 so geführt ist, daß er sich beim Durchfahren von Horizontalkurven relativ zum oberen Tragplattenabschnitt 3 verschwenken kann (s. Fig. 3). Der untere Tragplattenabschnitt 4 ist an seinem hinteren Rand 4' mit einer von der Tragfläche 1' senkrecht nach unten gerichteten Stirnwand 8 versehen.

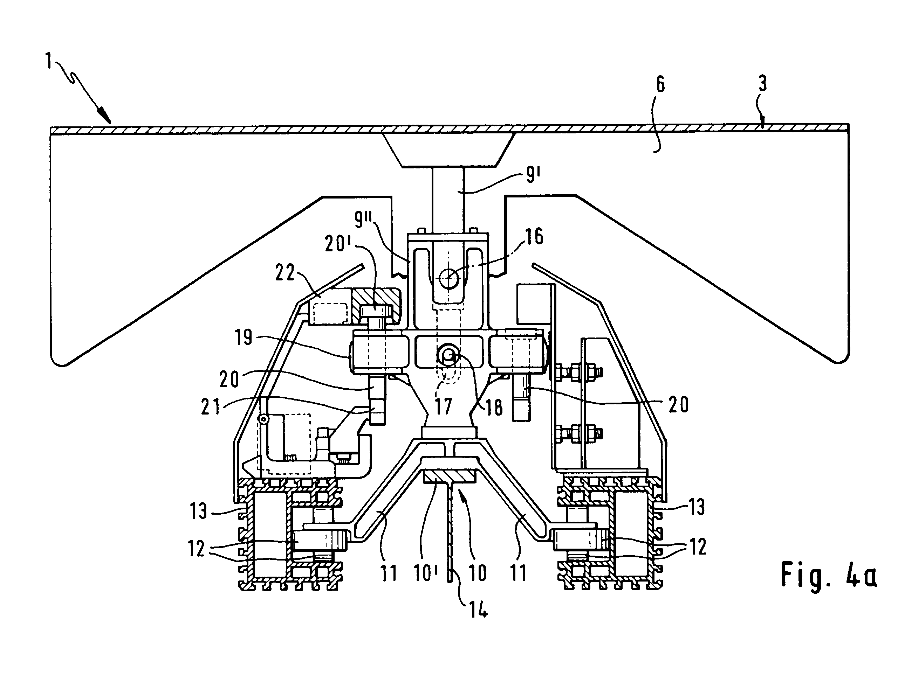

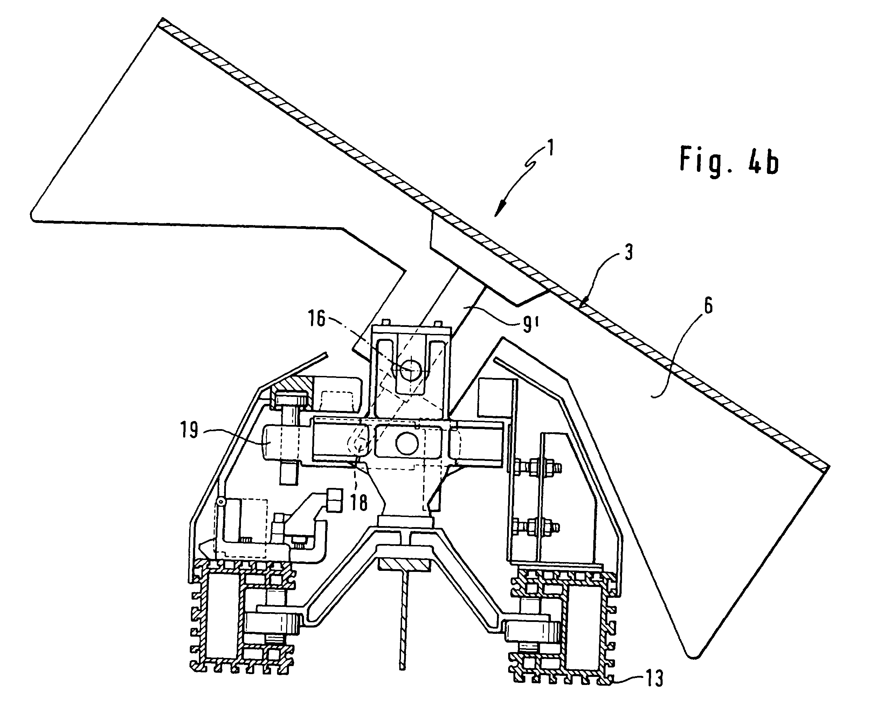

Der obere Tragplattenabschnitt 3 jeder Tragplatte 1 ist mit Abstand 1/2 zu seiner Stirnwand 6 mittels einer Stützeinrichtung 9 an einem Glied 10' einer Stützkette 10 abgestützt, die über in den Fig. 1, 1a nicht dargestellte Arme 11 und Rollen 12 an ortsfesten Führungsschienen 13 abgestützt ist (s. Fig. 4a, b) und mittels eines Linearmotors antreibbar ist, von dem in den Fig. 4a, b nur das sog. Schwert 14 erkennbar ist.

Die Stützeinrichtungen 9 weisen jeweils einen von der Unterseite eines oberen Tragplattenabschnittes 3 senkrecht nach unten vorstehenden oberen Stützabschnitt 9' sowie einen von dem betreffenden Glied 10' der Stützkette 10 senkrecht nach oben vorstehenden unteren Stützabschnitt 9" auf, die über eine in Förderrichtung 15 gerichtete Kippachse 16 gelenkig miteinander verbunden sind, welche am unteren Stützabschnitt 9" abgestützt ist.

Der mittig an der Unterseite jedes oberen Tragplattenabschnittes 3 befestigte obere Stützabschnitt 9' ist im wesentlichen stangenförmig ausgebildet und erstreckt sich über die Kippachse 16 hinaus nach unten, wo er mit einem Langloch 17 versehen ist, in welches ein parallel zur Kippachse 16 verlaufender Zapfen 18 greift, welcher sich durch eine Traverse 19 erstreckt, die am unteren Stützabschnitt 9" quer zur Förderrichtung 15 verschieblich gelagert und geführt ist. Die Traverse 19 ist im normalen Förderzustand (Fig. 1, la, 4a) durch Kopfbolzen 20 am unteren Stützabschnitt 9" verriegelt, wobei die Kopfbolzen 20 abgesenkt sind, wie dieses im rechten Teil von Fig. 4a erkennbar ist.

Zum Entriegeln und anschließendem seitlichen Kippen einer Tragplatte 1 wird ein an der betreffende Abgabestelle ortsfest angeordneter Nocken 21 aus einer zuvor abgesenkten Stellung so hochgeschwenkt, daß ein Kopfbolzen 20 mit seinem unteren Ende auf den Nocken 21 aufläuft und ihn unter gleichzeitiger Entriegelung der betreffenden Traverse 19 anhebt. Dabei gelangt der Kopf 20' dieses Kopfbolzens 20 in eine an der Abgabestelle ortsfest angeordnete, in Förderrichtung 15 nach außen gekrümmte Weiche 22 (s. linker Teil von Fig. 4a) und wird von dieser seitlich nach außen geführt, wobei der Kopfbolzen 20 die Traverse 19 aus ihrer Mittelstellung (Fig. 4a) seitlich bewegt (Fig. 4b), die dabei ihrerseits über den Zapfen 18 den oberen Stützabschnitt 9' und damit die Tragplatte 1 in die Schrägstellung gemäß Fig. 4b um die Kippachse 16 kippt. Das Zurückkippen der Tragplatte 1 in die horizontale Förderstellung gem. Fig. 4a erfolgt selbsttätig durch entsprechende Ausbildung der Weiche 22, wobei sich der Kopfbolzen 20 schließlich wieder in seine Verriegelungsstellung absenkt.

Bezüglich weiterer Einzelheiten dieses an sich bekannten Verriegelungs- und Kippmechanismus' wird z.B. auf die EP 0 664 262 A1 verwiesen.

Aus Fig. 5 ist die Wirkungsweise der Stirnwände 6, 8 erkennbar: Wenn eine Tragplatte 1 gekippt wird/ist, schließen sie den unterhalb der Tragplatte 1 befindlichen Raum stirnseitig jeweils bündig zu den benachbarten nicht gekippten Tragplatten 1 ab, so daß von dort aus kein Stückgut unter die gekippte Tragplatte 1 gelangen kann. Außerdem bilden sie für den nicht mit einer Stützeinrichtung 9 an der Stützkette 10 abgestützten unteren Tragplattenabschnitte 4 einer Tragplatte 1 ein Lager für einen zur Kippachse 16 fluchtenden Schwenkbolzen 23 (s. insb. Fig. 2). Hierfür ist an jeder Stirnwand 6, 8 ein buchsenförmiger Ansatz 24 ausgebildet, der zu dem Ansatz 24 der benachbarten Stirnwand fluchtet, so daß jeweils ein Schwenkbolzen 23 eingesteckt und an seinen über die Ansätze 24 vorstehenden Enden mit Sicherungsringen 25 gegen ein Herausgleiten gesichert werden kann.

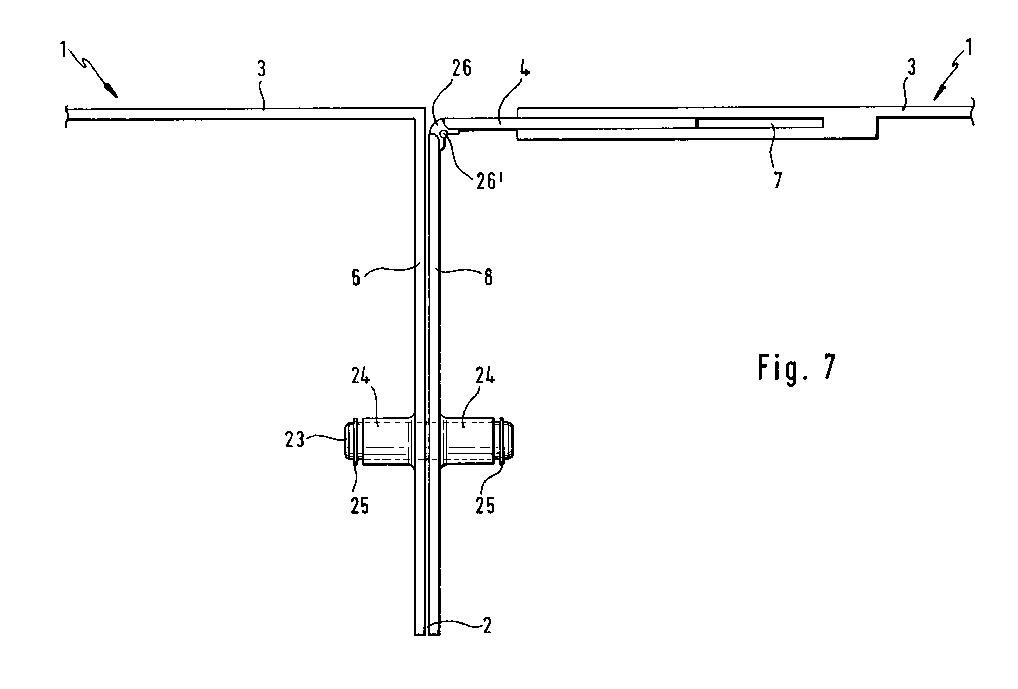

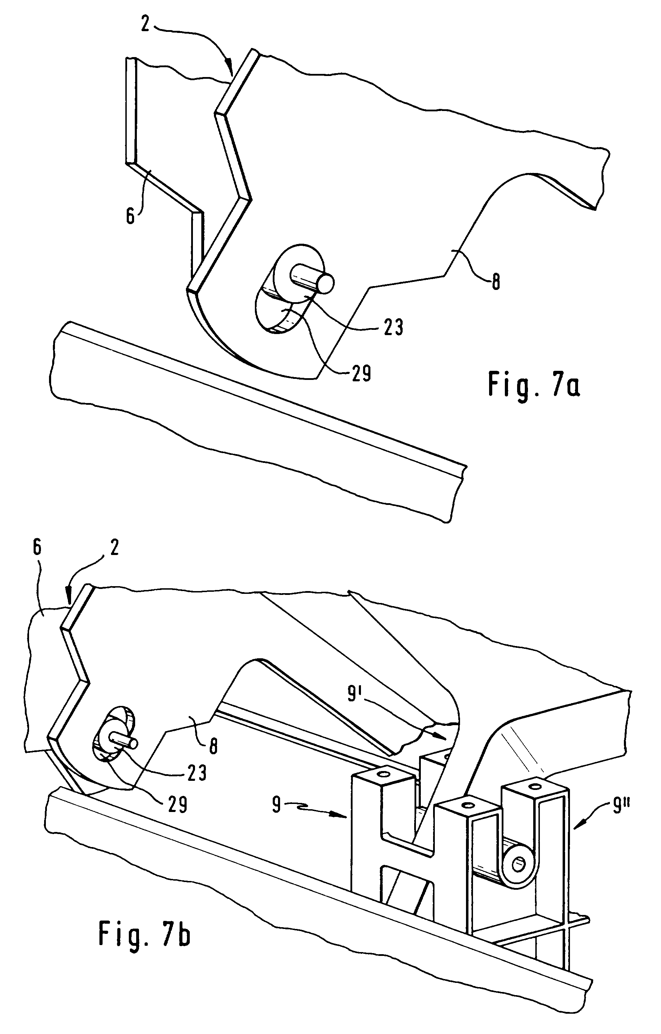

Der untere Tragplattenabschnitt 4 jeder Tragplatte 1 ist als ebene Platte ausgebildet und bildet einen Schenkel eines L-förmigen Elementes, dessen anderer Schenkel seine Stirnwand 8 bildet. Da der untere Tragplattenabschnitt 4 durch die Gewichtskraft eines auf die betreffende Tragplatte 1 aufgegebenen Stückgutteils praktisch nicht belastet ist, kann er relativ dünn und ggf. auch so flexibel ausgebildet werden, daß er sich beim Durchfahren von Vertikalkurven elastisch verformen kann, wie dieses in Fig. 6 stark schematisiert gezeigt ist. Da das beim Kippen einer Tragplatte 1 ihrem oberen Tragplattenabschnitt 3 eingeprägte Kippmoment von diesem im Bereich der Führung 7 auf den unteren Tragplattenabschnitt 4 übertragen werden muß, ist es an sich zweckmäßiger, den unteren Tragplattenabschnitt 4 als starre Platte auszubilden. Dieses ist auch durchaus möglich, wenn der untere Tragplattenabschnitt 4 mit seiner Stirnwand 8 über ein Gelenk 26 verbunden ist, dessen Schwenkachse 26' parallel und benachbart zum hinteren Rand der Tragplatte 1 verläuft, wie dieses in Fig. 7 dargestellt ist.

Da der obere Tragplattenabschnitt 3 sich im wesentlichen über die gesamte Länge L jeder Tragplatte 1 erstreckt und mithin dem oberen Tragplattenabschnitt 3 der benachbarten Tragplatte 1 nah benachbart ist, ist er jeweils an seinem hinteren Rand 3" von der Mitte aus zu den Längsrändern so abgeschrägt, daß es beim Durchfahren von Horizontalkurven nicht zu einer Kollision zwischen einander benachbarten oberen Tragplattenabschnitten 3 kommen kann, wie dieses aus Fig. 3 erkennbar ist.

Es sei noch nachgetragen, daß die Glieder 10' der Stützkette 10 jeweils über horizontale Schwenkachsen 27 und vertikale Schwenkachsen 28 miteinander verbunden sind, die ein Durchfahren von Vertikal- bzw. Horizontalkurven ermöglichen, wobei die Schwenkachsen 27, 28 jeweils benachbart zueinander angeordnet sind, ihre konstruktive Ausbildung allerdings nicht im einzelnen dargestellt ist, da sie für die vorliegende Erfindung unerheblich (und im übrigen auch bekannt) ist, da diese auf die Ausbildung der Tragplatten 1 bzw. ihrer Tragplattenabschnitte 3, 4 und deren Abstützung an der Stützkette 10 abstellt. Es ist ohne weiteres erkennbar, daß der vorstehend an einem Ausführungsbeispiel weiter erläuterte erfindungsgemäße Förderer gegenüber dem Stand der Technik schon deswegen erheblich vereinfacht ist, weil man - wie bei konventionellen Sortern - mit nur einer Stützeinrichtung 9 je Tragplatte 1 auskommt und durch ihre - vorzugsweise mittige - Anordnung mit Abstand zu den Stirnwänden 6, 8 nicht nur konventionelle Stützeinrichtungen 9 mit integrierter Kippeinrichtung verwenden kann, sondern auch zu einer sehr einfachen Ausbildung der Tragplattenabschnitte 3, 4 kommt. Dieses gilt sowohl für den von der Stützeinrichtung 9 abgestützten oberen Tragplattenabschnitt 3 als insb. auch für den praktisch unbelasteten unteren Tragplattenabschnitt 4, der nicht an der Stützkette 10 abgestützt zu werden braucht, da das Gewicht eines auf den biegesteifen oberen Tragplattenabschnitt 3 aufgegebenen Stückgutteils 5 von diesem abgefangen und in statisch günstiger Weise auf die Stützkette 10 übertragen wird. Trotz all dieser erheblichen Vereinfachungen kann es weder an der Tragfläche noch auch zwischen einer gekippten Tragplatte 1 und einer benachbarten nicht gekippten Tragplatte 1 nicht zu einer Verkeilung mit Stückgut kommen.

Fig. 7a zeigt in einer perspektivischen Teildarstellung eine Variante der Ausbildung gem. Fig. 7, die sich von letzterer insbesondere wie folgt unterscheidet: Der an der Stirnwand 6 befestigte Schwenkbolzen 23 ist in einem Langloch der Stirnwand 8 geführt, und zwar insbesondere deshalb, um die Verwendung von Stützeinrichtungen 9 (s. Fig. 7b im Ausschnitt) gemäß der EP 0 664 262 A1 o.ä. zu ermöglichen, bei denen die Tragplatte 1 beim Kippen jeweils abgesenkt wird, um eine besonders schonende Stückgutabgabe zu erwirken, wie in der vorgenannten Druckschrift im einzelnen ausgeführt ist.

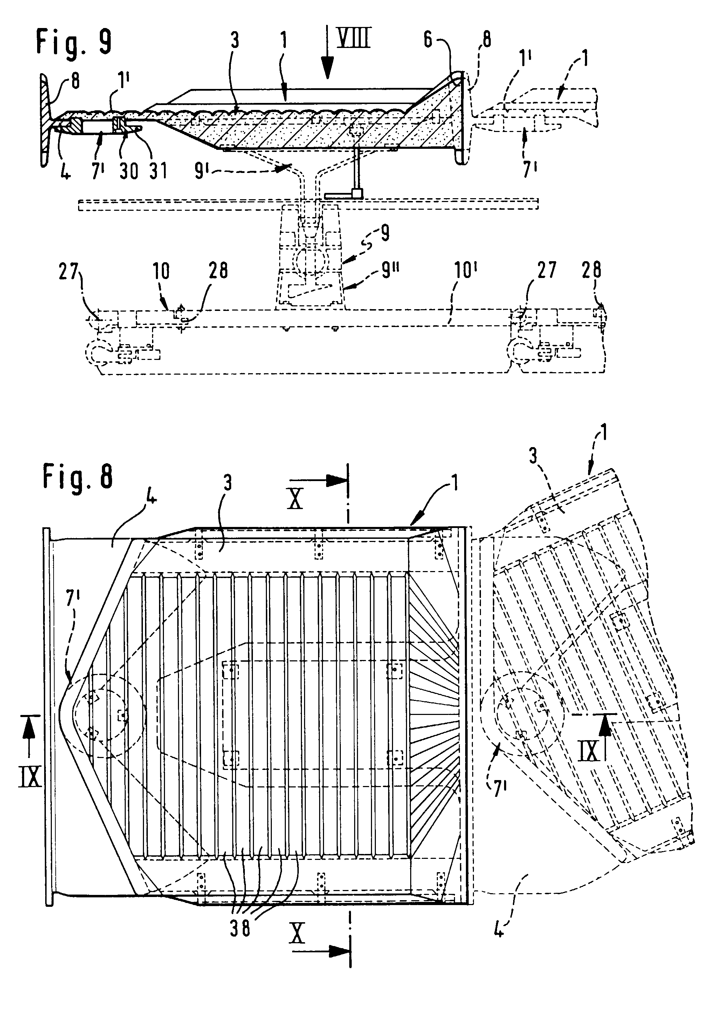

Die Fig. 8 bis 11 zeigen eine höchst bevorzugte Variante am Beispiel einer (mit ausgezogenen Linien dargestellten) Tragplatte 1 (sowie einer Teildarstellung einer sich hieran anschließenden, mit gestrichelten Linien dargestellten Tragplatte 1, die in der Darstellung gemäß Fig. 8 relativ zu der ihr benachbarten Tragplatte 1 in der Horizontalen verschwenkt ist), wobei sich diese Variante in vielfältiger Weise von den bisher dargestellten und beschriebenen Ausführungsbeispielen unterscheidet.

Zwar sind die Tragplatten 1 ebenfalls an ihrem vorderen und rückwärtigen Rand mit Stirnwänden 6 bzw. 3 versehen, diese erstrecken sich jedoch jeweils nicht nur von einer Tragplatte 1 nach unten sondern auch nach oben, und sind auch nicht mittels eines durch die Stirnwände 6, 8 geführten Schwenkbolzens 23 gelenkig miteinander verbunden. Vielmehr besitzt jede Tragplatte 1 bei dieser Ausgestaltung ein Gleit- und Gelenkelement 7', welches mittig an dem dem unteren Tragplattenabschnitt 4 zugekehrten Endabschnitt des oberen Tragplattenabschnittes 3 angeordnet ist und den unteren Tragplattenabschnitt 4 mit einem auf einem nicht um eine Horizontalachse gekrümmten Förderabschnitt im wesentlichen senkrechten Schwenkbolzen 30 durchsetzt, wobei am freien unteren Ende des Schwenkbolzens 30 ein Flansch 31 vorhanden ist, und der Abstand a zwischen der Unterseite des oberen Tragplattenabschnittes 3 und der Oberseite des Flansches 31 etwa gleich der Dicke s des unteren Tragplattenabschnittes 4 im Überlappungsbereich ist, so daß der untere Tragplattenabschnitt 4 "sandwichartig" zwischen den vorgenannten Elementen angeordnet und geführt und gehalten ist, sich dabei aber um den Schwenkbolzen 30 drehen kann, wie dieses insb. aus Fig. 8 deutlich erkennbar ist.

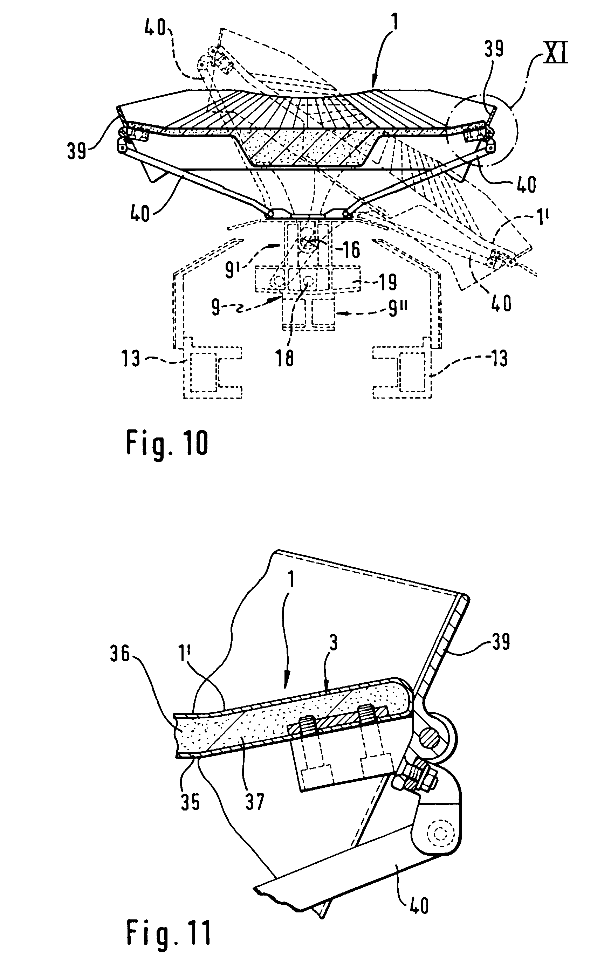

Weiterhin sei darauf verwiesen, daß an den Längsrändern der Tragplatte 1 jeweils hochstehende Seitenborde 39 angeordnet sind, die in der in den Fig. 10 und 11 dargestellten Weise im normalen Transportzustand schräg nach oben stehen, und die beim Kippen (s. gestrichelte Darstellung in Fig. 10) über Lenker 40 an der Kippseite jeweils selbsttätig so weit nach außen geschwenkt werden, daß sie im wesentlichen zu dem ihnen jeweils benachbarten Randabschnitt der Tragfläche 1' im gekippten Zustand fluchten. Offenkundiger Sinn und Zweck dieser Maßnahme und deren Ausgestaltung sind in der DE-OS 19 721 850 eingehend dargestellt und beschrieben, so daß hier weitere diesbezügliche Ausführungen entbehrlich sind.

Weiterhin unterscheidet sich die Ausbildung gemäß den Fig. 8 bis 11 auch dadurch nicht nur von den vorstehend beschriebenen Ausgestaltungen, sondern ganz allgemein zu Tragplatten- bzw. Tragschalenausführungen von Sortern im Stand der Technik, daß die Tragplatten 1 jeweils im wesentlichen aus einem gehäuseartigen Hohlkörper 35 aus einem widerstandsfähigen Kunststoffmaterial wie insbesondere/vorzugsweise glasfaserverstärktem Kunststoff (GFK) bestehen, wobei der Hohlraum 36 des Hohlkörpers 35 mit geschäumtem Polystyrol gefüllt ist, so daß die Tragplatten 1 selbst bei großen Abmessungen (wie insb. auch mit relativ großer Breite) zwar einerseits außerordentlich leicht sind, aber dennoch ein hohes Widerstandsmoment aufweisen, und daher ggf. auch mit relativ schweren Stückgutteilen problemlos beschickt werden können. Wie aus den Fig. 8 bis 11 erkennbar ist, sind die Tragplatten 1 in ihrem mittleren Abschnitt gegenüber den Randabschnitten erheblich verdickt, wobei allerdings auch diese mit Polystyrol ausgeschäumt sind.

Es sei noch darauf verwiesen, daß die Oberfläche, also die Tragplatte 1' der Tragplatten 1 mit zahlreichen Rippen 38 verist, die verhindern, daß es bei Feuchte, wie sie durch Niederschläge, nasses Stückgut oder ggf. auch Kondensation auftreten kann, zu starken Adhäsionskräften zwischen Stückgut und der (glatten) Tragfläche 1' kommt, welche im Stand der Technik ein problemloses Arbeiten von Sortern häufig in erheblicher Weise nachteilig beeinträchtigt haben.

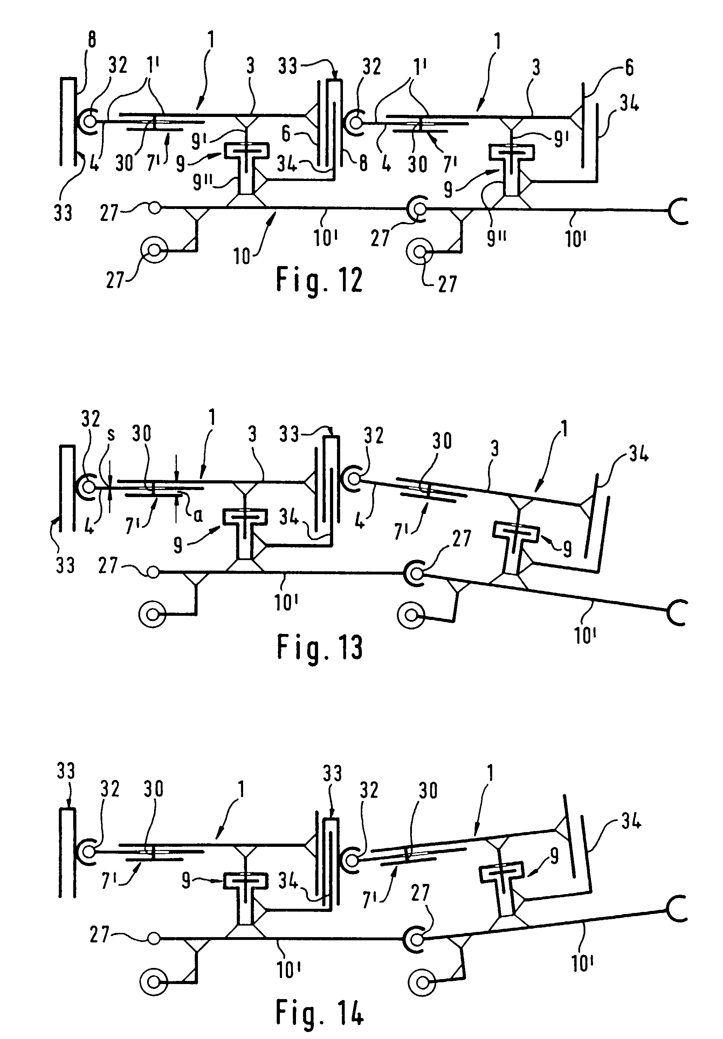

Die Fig. 12 ff. zeigen eine besonders bevorzugte Variante in einer stark schematisierten Darstellung, wobei auch hier für gleiche oder gleichwirkende Teile die gleichen Bezugszeichen wie bei den eingangs beschriebenen Ausgestaltungen verwendet worden sind. Diese Ausgestaltungen sind insbesondere für eine Förderbahn bestimmt, die an wenigstens einem Abschnitt um eine Horizontalachse vertikal gekrümmt ist. Dabei ist der untere Tragplattenabschnitt 4 einer Tragplatte 1 jeweils an seinem dem Gleit- und Gelenkelement 7' abgekehrten Ende über ein Kugelgelenk bzw. ein Scharniergelenk 32 mit horizontaler Schwenkachse an eine als Gleitschuh od. dgl. ausgebildete Gleiteinheit 33 angelenkt, die über ein von ihr gleitbar aufgenommenes Stützelement 34 mit der benachbarten Stützeinrichtung 9 verbunden ist.

Fig. 12 zeigt eine solche Ausbildung im Bereich eines geraden, nicht gekrümmten Streckenabschnittes, während Fig. 13 zwei einander benachbarte Förderelement im Bereich einer konvexen Kurve und Fig. 14 im Bereich einer konkaven Kurve zeigt.

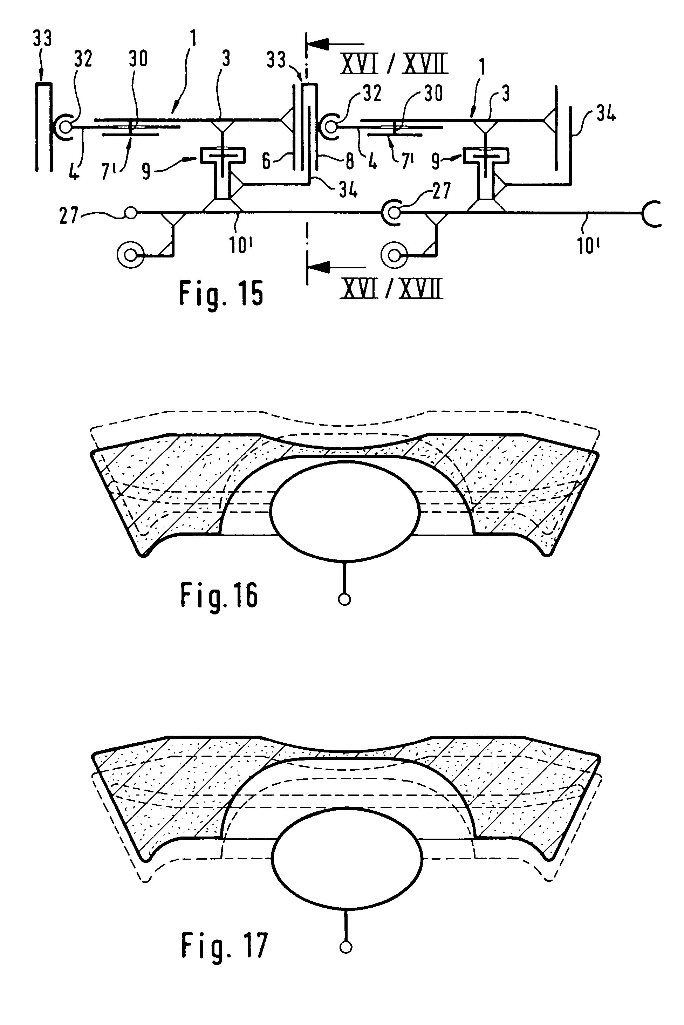

Aus den Fig. 16 und 17 (in der Zeichnung Fig. 15 zugeordnet, deren Darstellung Fig. 12 entspricht) ist die Verformung des Förderstrangs in Längsrichtung gesehen bei einer konvexen Kurve (Fig. 16) bzw. einer konkaven Kurve (Fig. 17) an der Schnittstelle XVI/XVII-XVI/XVII in Fig. 15 verdeutlicht.

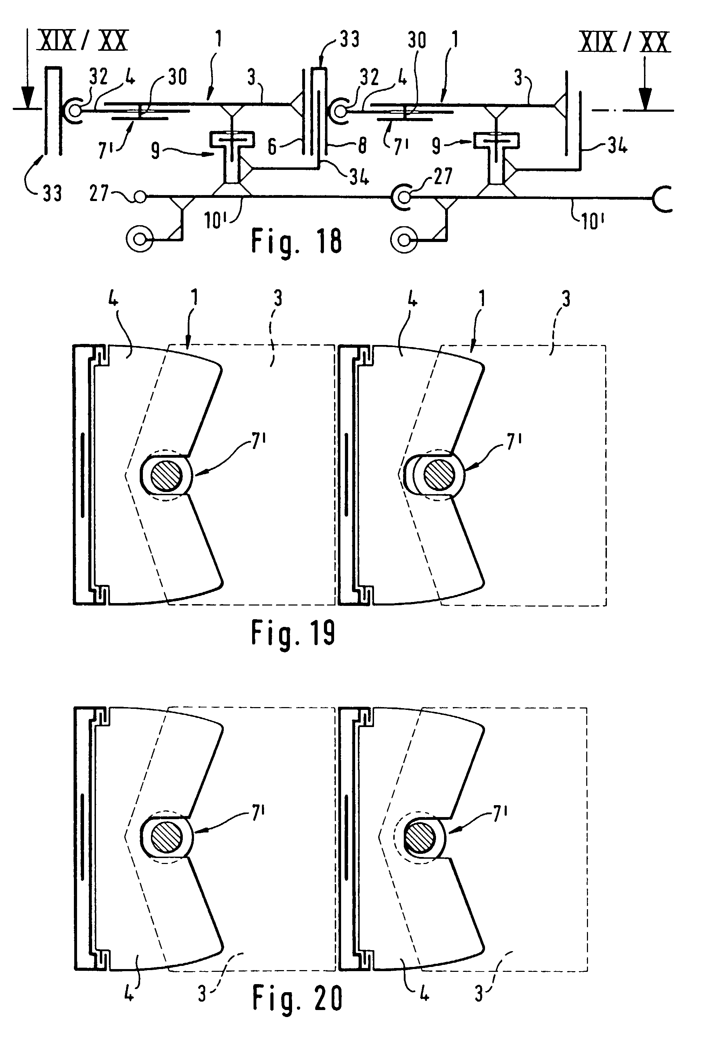

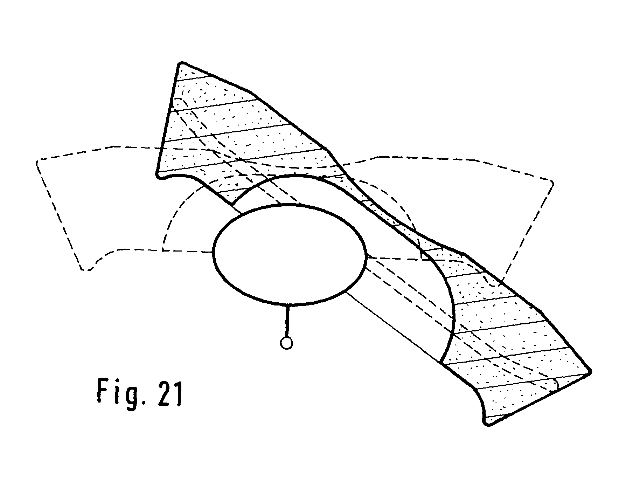

Die Fig. 19 und 20 zeigen in Zuordnung zu Fig. 18, die wiederum den Fig. 12 bzw. 15 enspricht, in einer Schnitt-Draufsicht gemäß der Schnittlinie XIX/XX-XIX/XX in Fig. 18 das Verhalten eines derartigen Förderstranges gleichsam in der Draufsicht, und zwar in Fig. 19 bei einer konvexen Kurve und in Fig. 20 bei einer konkaven Kurve, während Fig. 21 in einer ebenfalls schematisierten Schnittansicht eine den Fig. 16 bzw. 17 entsprechende Darstellung beim Kippen (in der Zeichnungsebene) nach rechts zeigt.

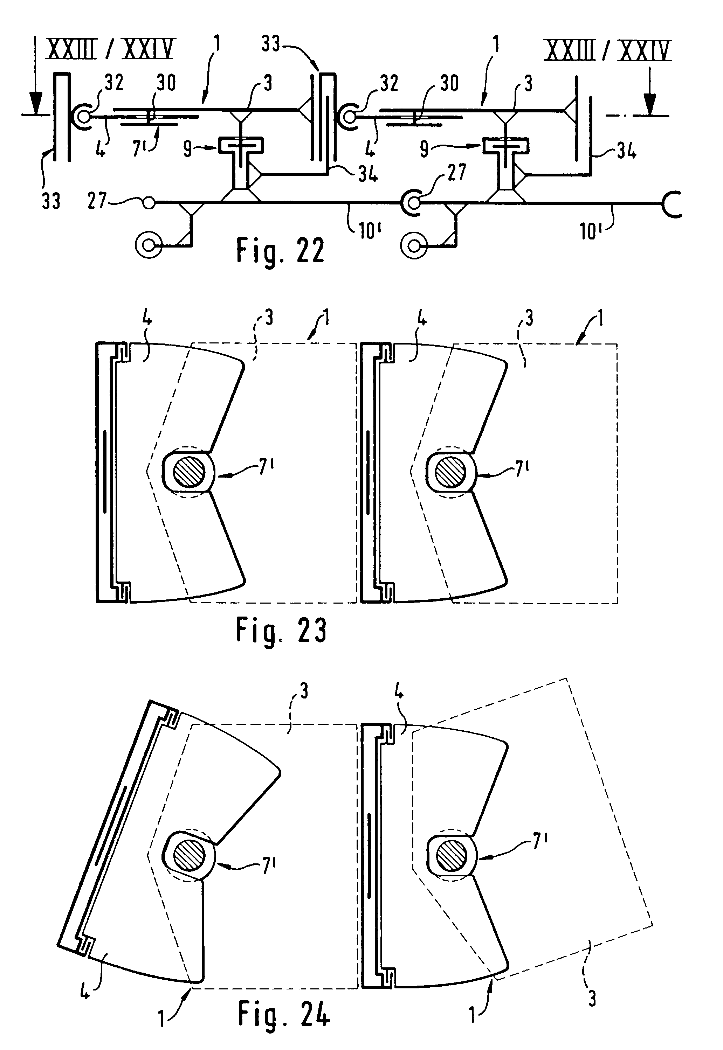

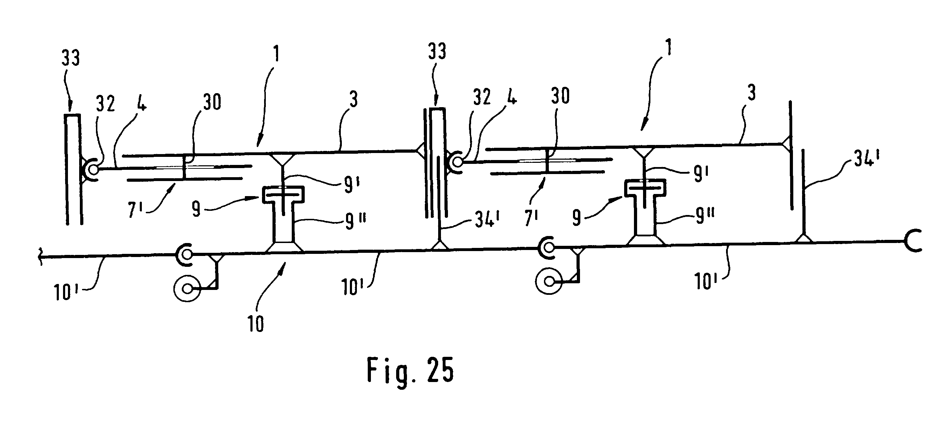

Die Fig. 23 bzw. 24 zeigen unter Zuordnung zu Fig. 22, die wiederum den Fig. 12 bzw. 15 bzw. 18 entspricht, gleichsam eine Schnitt-Draufsicht in Richtung der Schnittlinie XXIII/ XXIV-XXIII/XXIV in Fig. 22, und zwar auf einem linearen Förderabschnitt (Fig. 23) bzw. in einem horizontal gekrümmten Förderabschnitt (Fig. 24).

Schließlich zeigt Fig. 25 eine Variante in einer Fig. 12 (bzw. 18 bzw. 22) entsprechenden Darstellung, die sich von den vorgenannten Ausbildungen darin unterscheidet, daß das gleichsam einen "Fixpunkt" bildende Stützelement 34' nicht an der Stützeinrichtung 9 abgestützt, sondern unmittelbar jeweils zu einem Glied 10' der Stützkette 10 geführt ist.

### Bezugszeichenliste

- 1: Tragplatte
- 1': Tragfläche
- 2: Trennfuge
- 3: oberer Tragplattenabschnitt
- 3': vorderer Rand (von 3 bzw. 1)
- 3": hinterer Rand (von 3 bzw. 1)
- 4: unterer Tragplattenabschnitt
- 4': hinterer Rand (von 4 bzw. 1)
- 5: Stückgutteil
- 6: Stirnwand (von 3)
- 7 bzw. 7': Führung (an 3, für 4) bzw. Gleit- und Gelenkelement (an 9')
- 8: Stirnwand (von 4)
- 9: Stützeinrichtung
- 9': oberer Stützabschnitt (von 9)
- 9": unterer Stützabschnitt (von 9)
- 10: Stützkette
- 10': Glied (von 10)
- 11: Arme (von 10)
- 12: Rollen
- 13: Führungsschienen
- 14: Schwert
- 15: Förderrichtung
- 16: Kippachse
- 17: Langloch (von 9')
- 18: Zapfen
- 19: Traverse
- 20: Kopfbolzen
- 20': Kopf (von 20)
- 21: Nocken
- 22: Weiche
- 23: Schwenkbolzen
- 24: Ansatz (von 6, 8)
- 25: Sicherungsringe
- 26: Gelenk
- 26': Gelenkachse
- 27: horizontale Schwenkachsen (von 10)
- 28: vertikalen Schwenkachsen (von 10)
- 29: Langloch (in 8, für 23; s. Fig. 7a, 7b)
- 30: Schwenkbolzen (von 7')
- 31: Flansch (an 30)
- 32: Scharniergelenk
- 33: Gleiteinheit (Gleitschuh)
- 34, 34': Stützelement (für 33; an 9" bzw. 10')
- 35: gehäuseartiger Hohlkörper (von 1)
- 36: Hohlraum (von 35)
- 37: Leichtstoff (geschäumtes Polystyrol)
- 38: Rippen (von 1')
- 39: Seitenborde
- 40: Lenker

## Patentansprüche

1. Gliederförderer, insb. zum Transport und Sortieren von Stückgutteilen (5), mit einem längs einer in sich geschlossenen Förderbahn umlaufenden, antreibbaren Fördertrum, welches aus einer Vielzahl von einander in Förderrichtung (15) eng benachbart nachgeordneten Tragplatten (1) besteht, die über Stützeinrichtungen (9) an einer längs der Förderbahn geführten, endlosen, antreibbaren Stützkette (10) abgestützt sind, deren Glieder (10') um vertikale und ggf. horizontale Schwenkachsen (28 bzw. 27) relativ zueinander verschwenkbar sind, wobei
- die Stützeinrichtungen (9) jeweils einen von der Stützkette (10) nach oben vorstehenden, fest mit ihr verbundenen unteren Stützabschnitt (9") aufweisen, der über eine in Förderrichtung (15) verlaufende Kippachse (16) gelenkig mit einem von der Tragplatte (1) nach unten vorstehenden, fest mit ihr verbundenen oberen Stützabschnitt (9') verbunden ist,
- jeder Tragplatte eine mit einem oberen Stützabschnitt (9') verbundene Kippeinrichtung zugeordnet ist, mittels welcher die Tragplatte (1) aus einer horizontalen Transportstellung um die Kippachse (16) seitlich in eine schräge Abgabestellung zu kippen ist,
- an dem quer zur Förderrichtung (15) verlaufenden vorderen und/oder hinteren Rand (3' bzw. 3", 4') jeder Tragplatte (1) eine von ihrer Tragfläche (1') senkrecht nach unten gerichtete Stirnwand (6 bzw. 8) angeordnet ist, und
- die Tragplatten (1) jeweils aus zwei einander teilweise überlappenden Tragplattenabschnitten (3, 4) bestehen, von denen der eine Tragplattenabschnitt (4) mittels einer an der ihm zugekehrten Seite des anderen Tragplattenabschnittes (3) angeordneten Führung (7; 7') so geführt ist, daß er sich beim Durchfahren von gekrümmten Förderbahnabschnitten relativ zum anderen Tragplattenabschnitt (3) bewegen kann,
- wobei der andere Tragplattenabschnitt (3) einer Tragplatte (1) jeweils aus einer sich im wesentlichen über die gesamte Länge (L) der Tragplatte (1) erstreckenden, biegesteifen Platte besteht und mit einem Abstand (1/2) zu seiner Stirnwand (6) mit einer Stützeinrichtung (9) an einem Glied (10') der Stützkette (10) abgestützt ist, der etwa gleich seiner halben Länge (l) ist;
- und wobei der nicht unmittelbar mit der Stützkette (10) verbundene eine Tragplattenabschnitt (4) der Tragplatte (1) an den ihm benachbarten anderen Tragplattenabschnitt (3) der Tragplatte (1) mittels eines Gleit- und Gelenkelementes (7; 7') so angelenkt ist, daß sich die beiden Tragplattenabschnitte (3, 4) unter Aufrechterhaltung einer auf nicht gekrümmten Förderbahnabschnitten vorhandenen geschlossenen, spaltfreien Förderebene in einem horizontal oder/und ggf. vertikal gekrümmten Förderbahnabschnitt relativ zueinander bewegen können.

2. Förderer nach Anspruch 1, dadurch gekennzeichnet, daß der unmittelbar an der Stützkette (10) abgestützte (vorzugsweise obere) Tragplattenabschnitt (3) einer Tragplatte (1) jeweils i.w. mittig von der Stützeinrichtung (9) abgestützt ist.

3. Förderer nach Anspruch 1 oder 2, dadurch gekennzeichnet, daß der eine (vorzugsweise untere) Tragplattenabschnitt (4) der Tragplatte (1) an den ihm benachbarten anderen, vorzugsweise oberen, Tragplattenabschnitt (3) der, ggf. benachbarten, Tragplatte (1) mittels eines Gleit- und Gelenkelementes (7) an die Stirnwand (6) des anderen (vorzugsweise oberen) Tragplattenabschnittes (3) der benachbarten Tragplatte (1) angelenkt ist.

4. Förderer nach Anspruch 3, dadurch gekennzeichnet, daß der an einer Stirnwand (6) befestigte Schwenkbolzen (23) in der benachbarten Stirnwand (8) in einem Langloch (29) geführt ist.

5. Förderer nach einem oder mehreren der vorhergehenden Ansprüche, dadurch gekennzeichnet, daß jeweils zwei unmittelbar benachbarte, jeweils aus einer dünnen Platte bestehende Stirnwände (6, 8) im Bereich des Schwenkbolzens (23) mit einem nach innen gerichteten, buchsenförmigen Ansatz (24) versehen sind, in dem der Schwenkbolzen (23) gelagert ist.

6. Förderer nach einem oder mehreren der vorhergehenden Ansprüche, dadurch gekennzeichnet, daß der untere Tragplattenabschnitt (4) einer Tragplatte (1) jeweils einen Schenkel eines L-förmigen Elementes bildet, dessen anderer Schenkel seine Stirnwand (8) bildet.

7. Förderer nach einem oder mehreren der vorhergehenden Ansprüche, dadurch gekennzeichnet, daß der untere Tragplattenabschnitt (4) einer Tragplatte (1) jeweils mit seiner Stirnwand (8) über ein Gelenk (26), insb. ein Scharniergelenk, verbunden ist, welches eine quer zur Förderrichtung (15) verlaufende Schwenkachse bildet.

8. Förderer nach einem oder mehreren der vorhergehenden Ansprüche, dadurch gekennzeichnet, daß der obere Tragplattenabschnitt (3) jeder Tragplatte (1) an einem nicht mit einer Stirnwand (6) versehenen Querrand (3") von der Mitte aus zu seinen Längsrändern hin abgeschrägt ist.

9. Förderer nach Anspruch 1 oder 2, dadurch gekennzeichnet, daß das Gleit- und Gelenkelement (7') an der Stützeinrichtung (9) angeordnet ist.

10. Förderer nach Anspruch 9, dadurch gekennzeichnet, daß das Gleit- und Gelenkelement (7') am oberen Stützabschnitt (9') der Stützeinrichtung (9) angeordnet ist.

11. Förderer nach Anspruch 9 oder 10, dadurch gekennzeichnet, daß das Gleit- und Gelenkelement (7') i.w. mittig an dem dem unteren Tragplattenabschnitt (4) zugekehrten Endabschnitt des oberen Tragplattenabschnittes (3) angeordnet ist.

12. Förderer nach Anspruch 11, dadurch gekennzeichnet, daß das Gleit- und Gelenkelement (7') den unteren Tragplattenabschnitt (4) mit einem auf einem nicht um eine Horizontalebene gekrümmten Förderabschnitt i.w. senkrechten Schwenkbolzen (30) od.dgl. durchsetzt.

13. Förderer nach Anspruch 12, dadurch gekennzeichnet, daß am freien unteren Ende des Schwenkbolzens (30) ein Flansch (31) od.dgl. vorhanden ist.

14. Förderer nach Anspruch 13, dadurch gekennzeichnet, daß der Abstand (a) zwischen der Unterseite des oberen Tragplattenabschnittes (3) und der Oberseite des Flansches (31) etwa gleich der Dicke (s) des unteren Tragplattenabschnittes (4) im Überlappungsbereich ist.

15. Förderer nach einem oder mehreren der Ansprüche 9 bis 14, insb. für eine Förderbahn, die an wenigstens einem Abschnitt um eine Horizontalachse vertikal gekrümmt ist, dadurch gekennzeichnet, daß der untere Tragplattenabschnitt (4) einer Tragplatte (1) jeweils an seinem dem Gleit- und Gelenkelement (7') abgekehrten Ende über ein Kugelgelenk bzw. ein Scharniergelenk (32) mit horizontaler Schwenkachse od.dgl. an eine als Gleitschuh od.dgl. ausgebildete Gleiteinheit (33) angelenkt ist, die über ein von ihr gleitbar aufgenommenes Stützelement (34) mit der Stützkette (10) verbunden bzw. an dieser abgestützt ist.

16. Förderer nach Anspruch 15, dadurch gekennzeichnet, daß das einen Fixpunkt bildende Stützelement (34) jeweils am unteren Stützabschnitt (9") der benachbarten Stützeinrichtung (9) befestigt ist.

17. Förderer nach einem oder mehreren der Ansprüche 9 bis 14, dadurch gekennzeichnet, daß das Stützelement (34) jeweils an einem Glied (10') der Stützkette (10) befestigt ist.

## Claims

1. An articulated conveyor, more particularly for the transport and sorting of piece good parts (5), with a drivable conveyor run which revolves along an endless conveyor path and which consists of a plurality of carrier plates (1) disposed successively and closely together in the conveyor direction (15), said carrier plates being supported by way of support devices (9) on an endless drivable support chain (10) which is guided along the conveyor path and the links (10') of which are pivotable relatively to one another about vertical and, if required, horizontal pivot axes (28 and 27 respectively), wherein
- the support devices (9) each comprise a bottom support portion (9") projecting upwardly from the support chain (10) and rigidly connected thereto, said support portion being connected pivotally, by way of a tipping axis (16) extending in the conveyor direction (15), to a top support portion (9') projecting down from the carrier plate (1) and rigidly connected thereto,
- there is associated with each carrier plate a tipping device which is connected to a top support portion (9') and by means of which the carrier plate (1) can be tipped out of a horizontal transport position about the tipping axis (16) laterally into an oblique delivery position,
- an end wall (6 and 8 respectively) directed vertically downwards from the carrier plate carrier surface (l') is disposed on the front and/or rear edge (3' and 3", 4' respectively) of each carrier plate (l) extending transversely of the conveyor direction (15), and
- the carrier plates (l) each consist of two partially overlapping portions (3, 4), of which one portion (4) is so guided, by a guide (7; 7') disposed on the side of the other portion (3) facing it that as it travels through curved conveyor path portions it can move relatively to the other portion (3), wherein the other portion (3) of a carrier plate (1) consists in each case of a bending-resistant plate extending substantially over the entire length (L) of the carrier plate (1), and is supported, at a distance (1/2) from its end wall (6) by a support device (9) on a link (10') of the support chain (10) which is equal approximately to half its length (1), and wherein the one portion (4) of the carrier plate (1) not directly connected to the support chain (10) is so articulated by means of a slide and joint element (7; 7') on the other portion (3) of the carrier plate (1) adjacent to it that the two portions (3, 4) can move relatively to one another while maintaining a closed gap-free conveyor plane on non-curved conveyor path portions, in a horizontally and/or if required vertically curved conveyor path portion.

2. A conveyor according to claim 1, characterised in that the portion (3) (preferably the top portion) of a carrier plate (1) supported directly on the support chain (10), is in each case supported substantially centrally by the support device (9).

3. A conveyor according to claim 1 or 2, characterised in that the one portion (4) (preferably the bottom portion) of the carrier plate (1) is articulated on the other portion (3) (preferably the top portion) adjacent to it, of the possibly adjacent carrier plate (1), by means of a slide and joint element (7) against the end wall (6) of the other portion (3) (preferably the top portion) of the adjacent carrier plate (1).

4. A conveyor according to claim 3, characterised in that the pivot pin (23) fixed on an end wall (6) is guided in the adjacent end wall (8) in a slot (29).

5. A conveyor according to any one or more of the preceding claims, characterised in that each two directly adjacent end walls (6, 8) each consisting of a thin plate are provided, in the region of the pivot pin (23), with an inwardly directed projection (24) in the form of a bush in which the pivot pin (23) is mounted.

6. A conveyor according to any one or more of the preceding claims, characterised in that the bottom portion (4) of a carrier plate (1) in each case forms a limb of an L-shaped element, the other limb of which forms its end wall (8).

7. A conveyor according to any one or more of the preceding claims, characterised in that the bottom portion (4) of a carrier plate (1) is in each case connected to its end wall (8) via a joint (26), more particularly a hinge joint, which forms a pivot axis extending transversely of the conveyor direction (15).

8. A conveyor according to any one or more of the preceding claims, characterised in that the top portion (3) of each carrier plate (1) is bevelled, at a transverse edge (3") not provided with an end wall (6), from the centre towards its longitudinal edges.

9. A conveyor according to claim 1 or 2, characterised in that the slide and joint element (7') is disposed on the support device (9).

10. A conveyor according to claim 9, characterised in that the slide and joint element (7') is disposed on the top support portion (9') of the support device (9).

11. A conveyor according to claim 9 or 10, characterised in that the slide and joint element (7') is disposed substantially centrally on the end portion of the top carrier plate portion (3) facing the bottom carrier plate portion (4).

12. A conveyor according to claim 11, characterised in that the slide and joint element (7') extends through the bottom carrier plate portion (4) with a pivot pin (30) or the like which is substantially vertical on a conveyor portion not curved about a horizontal plane.

13. A conveyor according to claim 12, characterised in that a flange (31) or the like is provided at the free bottom end of the pivot pin (30).

14. A conveyor according to claim 13, characterised in that the distance (a) between the underside of the top carrier plate portion (3) and the upper side of the flange (31) is substantially equal to the thickness (s) of the bottom carrier plate portion (4) in the overlap zone.

15. A conveyor according to any one or more of claims 9 to 14, more particularly for a conveyor path which is vertically curved about a horizontal axis at one portion at least, characterised in that the bottom portion (4) of a carrier plate (1) is in each case articulated, at its end remote from the slide and joint elements (7'), by way of a ball joint or a hinge joint (32) with a horizontal pivot axis or the like, on a slide unit (33) formed as a slide shoe or the like which is connected to or supported on the support chain (10) via a support element (34) slidably received by said unit.

16. A conveyor according to claim 15, characterised in that the support element (34) which forms a fixed point is fixed in each case on the bottom support portion (9") of the adjacent support device (9).

17. A conveyor according to any one or more of claims 9 to 14, characterised in that the support element (34) is in each case fixed on a link (10') of the support chain (10).

## Revendications

1. Convoyeur articulé, en particulier pour le transport et le tri de colis (5), comprenant un brin de convoyage entraîné qui circule le long d'un chemin de convoyage fermé en soi et qui se compose d'une pluralité de plateaux porteurs voisins (1) qui se succèdent de manière rapprochée dans la direction de convoyage (15) et qui prennent appui, par l'intermédiaire de dispositifs d'appui (9), sur une chaîne d'appui sans fin, entraînée (10) qui est guidée le long du chemin de convoyage et dont les segments (10') peuvent pivoter les uns par rapport aux autres autour d'axes de pivotement verticaux et éventuellement horizontaux (28 et, respectivement, 27),
- les dispositifs d'appui (9) comportant chacun une portion inférieure d'appui (9") qui s'étend vers le haut à partir de la chaîne d'appui (10), qui est solidarisée à celle-ci et qui, par l'intermédiaire d'un axe de basculement (16) s'étendant dans la direction de convoyage (15), est reliée de manière articulée à une portion supérieure d'appui (9') qui s'étend vers le bas à partir du plateau porteur (1) et qui est solidarisée avec celui-ci,
- à chaque plateau porteur étant associé un dispositif de basculement qui est relié à une portion supérieure d'appui (9') et qui permet de basculer le plateau porteur (1) latéralement autour de l'axe de basculement (16) d'une position de transport horizontale dans une position de déchargement inclinée,
- au niveau des bords avant et/ou arrière (3' et, respectivement, 3", 4') de chaque plateau qui s'étendent transversalement à la direction de convoyage (15) étant disposées des parois frontales (6 et, respectivement, 8) qui sont orientées verticalement vers le bas à partir de la surface porteuse (1') dudit plateau porteur, et
- les plateaux porteurs (1) étant constitués chacun de deux portions de plateau porteur (3, 4) qui se chevauchent partiellement l'une l'autre et dont la portion de plateau porteur (4) est guidée, au moyen d'un guide (7 ; 7') disposé sur le côté en vis-à-vis de l'autre portion de plateau porteur (3), de façon qu'elle puisse bouger par rapport à l'autre portion de plateau porteur (3) lors du franchissement de portions courbes du chemin de convoyage,
- l'autre portion de plateau porteur (3) de chaque plateau porteur (1) étant constituée d'un plateau rigide en flexion qui s'étend sensiblement sur toute la longueur (L) du plateau porteur (1) et, à une distance (1/2) par rapport à sa paroi frontale (6), prenant appui, au moyen d'un dispositif d'appui (9), sur un segment (10') de la chaîne d'appui (10) égal à environ la moitié de sa longueur (l),
- et la portion de plateau porteur (4) du plateau porteur (1) qui n'est pas reliée directement à la chaîne d'appui (10) étant articulée, au moyen d'un élément de coulissement et d'articulation (7 ; 7'), avec l'autre portion de plateau porteur voisine (3) du plateau porteur (1), de façon que, dans une portion horizontale et/ou éventuellement verticale du chemin de convoyage, les deux portions de plateau porteur (3, 4) puissent bouger l'une par rapport à l'autre en conservant le plan de convoyage fermé ininterrompu qui existe dans les portions non courbes du chemin de convoyage.

2. Convoyeur selon la revendication 1, caractérisé en ce que la portion (de préférence supérieure) de plateau porteur (3) de chaque plateau porteur (1) prenant directement appui sur la chaîne d'appui (10) est supportée sensiblement en son centre par le dispositif d'appui (9).

3. Convoyeur selon la revendication 1 ou 2, caractérisé en ce que l'une des portions de plateau porteur (4) (de préférence la portion inférieure) du plateau porteur (1) est articulée avec l'autre portion voisine de plateau porteur (3), de préférence la portion supérieure, du plateau porteur éventuellement voisin (1) au moyen d'un élément de coulissement et d'articulation (7) disposé au niveau de la paroi frontale (6) de l'autre portion de plateau porteur (3) (de préférence la portion supérieure) du plateau porteur voisin (1).

4. Convoyeur selon la revendication 3, caractérisé en ce que le pivot (23) fixé à la paroi frontale (6) est guidé dans un trou oblong (29) de la paroi frontale voisine (8).

5. Convoyeur selon une ou plusieurs des revendications précédentes, caractérisé en ce que deux parois frontales (6, 8) immédiatement voisines, constituées chacune d'une plaque mince, sont munies chacune, dans la zone du pivot (23), d'un appendice en forme de douille (24) qui est dirigé vers l'intérieur et dans lequel est monté le pivot (23).

6. Convoyeur selon une ou plusieurs des revendications précédentes, caractérisé en ce que la portion inférieure de plateau porteur (4) de chaque plateau porteur (1) forme l'une des branches d'un élément en forme de L dont l'autre branche forme sa paroi frontale (8).

7. Convoyeur selon une ou plusieurs des revendications précédentes, caractérisé en ce que la portion inférieure de plateau porteur (4) de chaque plateau porteur (1) est reliée à sa paroi frontale (8) par l'intermédiaire d'une articulation (26), en particulier d'une articulation à charnière, laquelle forme un axe de pivotement qui s'étend transversalement à la direction de convoyage (15).

8. Convoyeur selon une ou plusieurs des revendications précédentes, caractérisé en ce que, au niveau d'un bord transversal (3") dépourvu de paroi frontale (6), la portion supérieure de plateau porteur (3) de chaque plateau porteur (1) est biseautée à partir du centre vers ses bords longitudinaux.

9. Convoyeur selon la revendication 1 ou 2, caractérisé en ce que l'élément de coulissement et d'articulation (7') est disposé sur le dispositif d'appui (9).

10. Convoyeur selon la revendication 9, caractérisé en ce que l'élément de coulissement et d'articulation (7') est disposé sur la portion supérieure d'appui (9') du dispositif d'appui (9).

11. Convoyeur selon la revendication 9 ou 10, caractérisé en ce que l'élément de coulissement et d'articulation (7') est disposé sensiblement au centre de la portion extrême, tournée vers la portion inférieure de plateau porteur (4), de la portion supérieure de plateau porteur (3).

12. Convoyeur selon la revendication 11, caractérisé en ce que l'élément de coulissement et d'articulation (7') traverse la portion inférieure de plateau porteur (4) par l'intermédiaire d'un pivot (30) ou d'un organe analogue qui est sensiblement vertical dans une portion de convoyage non courbée autour d'un plan horizontal.

13. Convoyeur selon la revendication 12, caractérisé en ce qu'un collet (31) ou un organe analogue est prévu à l'extrémité inférieure libre du pivot (30).

14. Convoyeur selon la revendication 13, caractérisé en ce que la distance (a) entre le dessous de la portion supérieure de plateau porteur (3) et le dessus du collet (31) correspond sensiblement à l'épaisseur (s) de la portion inférieure de plateau porteur (4) dans la zone de chevauchement.

15. Convoyeur selon une ou plusieurs des revendications 9 à 14, en particulier pour un chemin de convoyage qui est courbé verticalement autour d'un axe horizontal dans au moins une de ses portions, caractérisé en ce que, au niveau de l'extrémité située à l'opposé de l'élément de coulissement et d'articulation (7'), la portion inférieure de plateau porteur (4) de chaque plateau porteur (1) est articulée, par l'intermédiaire d'une articulation à rotule ou, respectivement, d'une articulation à charnière (32) à axe de pivotement ou organe analogue horizontal, avec une unité coulissante (33) qui est conçue sous la forme d'un patin coulissant ou d'un organe analogue et qui est reliée à la chaîne d'appui (10) par l'intermédiaire d'un élément d'appui (34) logé à l'intérieur de manière coulissante ou qui prend appui sur ce dernier.

16. Convoyeur selon la revendication 15, caractérisé en ce que chaque élément d'appui (34) formant un point fixe est fixé à la portion inférieure d'appui (9") du dispositif d'appui voisin (9).

17. Convoyeur selon une ou plusieurs des revendications 9 à 14, caractérisé en ce que chaque élément d'appui (34) est fixé à un segment (10') de la chaîne d'appui (10).
